# EUROPÄISCHE PATENTSCHRIFT

(11) **EP 3 752 268 B1**
(45) Veröffentlichungstag und Bekanntmachung des Hinweises auf die Patenterteilung: **10.09.2025**
(21) Anmeldenummer: 19704002.5
(22) Anmeldetag: 08.02.2019
(51) Int. Cl.: B01D 35/147, B01D 36/00, B01D 29/15, B01D 29/21, B01D 29/54, B01D 29/58, B01D 39/08, B01D 39/16

(54) **FILTERELEMENT ZUM FILTERN EINES FLUIDSTROMS**
FILTER ELEMENT FOR FILTERING A FLUID FLOW
ÉLÉMENT FILTRANT POUR FILTRER UN FLUX DE FLUIDE

(30) Priorität: 13.02.2018 DE 102018202178
(43) Veröffentlichungstag der Anmeldung: 23.12.2020
(73) Patentinhaber: Filtration Group GmbH, 74613 Öhringen (DE)
(72) Erfinder: HESSE, Gernot, 74613 Öhringen (DE); SCHÖPP, Wilhelm, 68804 Altlußheim (DE)
(74) Vertreter: BRP Renaud & Partner mbB Rechtsanwälte Patentanwälte Steuerberater
(86) Internationale Anmeldenummer: PCT/EP2019/053090
(87) Internationale Veröffentlichungsnummer: WO 2019/158437

(56) Entgegenhaltungen:
- WO-A1-01/38744
- WO-A1-2016/146424
- DE-A1- 102017 003 732
- DE-U1- 202008 001 534
- US-A1- 2008 135 469

## Beschreibung

Die vorliegende Erfindung betrifft eine Filtereinrichtung mit einem Filterelement zum Filtern von Schmieröl, gemäß dem Oberbegriff des Anspruchs 1 oder gemäß dem Oberbegriff des Anspruchs 8.

Durchströmt ein Fluidstrom ein Filterelement, so resultiert dies in einem Druckabfall des Fluidstroms an dem Filterelement. Je geringer die Filterfeinheit eines Filterkörpers ist, desto höher ist der Druckabfall des Fluidstroms an dem Filterkörper. Um einen zu großen, unerwünschten Druckabfall zu vermeiden, kann ein Filterelement mehrere Filterkörper mit jeweils unterschiedlicher Filterfeinheit aufweisen, durch welche unterschiedliche Filterstufen gebildet sind. Ein Filterelement kann ferner wenigstens ein Bypassventil zur Umgehung einer oder mehrerer Filterstufen aufweisen. Der Druckabfall an dem Filterelement bzw. welche Filterstufen durch den Fluidstrom durchströmt werden, ist abhängig von der Viskosität des Fluidstroms, wobei die Viskosität des Fluidstroms abhängig von der Temperatur des Fluidstroms ist. Die Filterfeinheit des jeweiligen Filterkörpers und das wenigstens eine Bypassventil können dabei so ausgelegt sein, dass abhängig von der Temperatur bzw. der Viskosität des Fluidstroms unterschiedliche Filterkörper durchströmt werden, wodurch unterschiedliche Reinheitsgrade des gefilterten Fluidstroms erreicht werden.

Das Filterelement kann in einem Filtergehäuse mit einem Deckel angeordnet sein und Fixierlaschen aufweisen, die in den Deckel greifen, wenn der Deckel am Filtergehäuse angeordnet ist und sich das Filtergehäuse im geschlossenen Zustand befindet, wodurch das Filterelement im Filtergehäuse mittig zentriert ist, auch wenn sich das Filtergehäuse in einer schrägen Einbaulage befindet. Nachteilig ist, dass die Fixierlaschen nur dann in den Deckel greifen, wenn sich das Filtergehäuse im geschlossenen Zustand befindet. Wird der Deckel von dem Filtergehäuse gelöst, z.B. beim Wechsel des Filterelements, so ist das Filterelement nicht mehr durch die Fixierlaschen mittig im Filtergehäuse zentriert. Das Filterelement liegt bei gelöstem Deckel an den Innenwänden des Filtergehäuses an, wodurch der Wechsel des Filterelements erschwert wird. Ferner ist nachteilig, dass Wasser und Ölalterungsprodukte nur unzureichend durch das Filterelement abgeschieden werden.

WO 01/38744 A1 offenbart einen Filter, wobei der Filter ein Filterelement mit unterschiedlichen Filterstufen und einen im Filterelement angeordneten Schutzfilterkörper aufweist. Ferner ist in dem Filter ein Bypass zum Umgehen des Filterelements ausgebildet. Ferner weist das Filterelement einen Abstandsrand auf, durch den es umlaufend beabstandet im Gehäuse angeordnet ist. Der Abstandsrand trennt dabei die Filterstufen des Filterlements fluidisch voneinander.

DE 10 2017 003 732 A1 offenbart einen Filter, in dem ein Feinfilter einem Hauptfilter nachgeschaltet ist.

Die vorliegende Erfindung beschäftigt sich daher mit dem Problem, für ein Filterelement eine verbesserte oder zumindest alternative Ausführungsform anzugeben, die insbesondere verhindert, dass das Filterelement beim Wechsel des Filterelements am Filtergehäuse anliegt und durch die es ermöglicht ist, Wasser und Ölalterungsprodukte beim Filtern des Fluidstroms aus dem Fluidstrom abzuscheiden.

Die vorliegende Erfindung beschäftigt sich daher mit dem Problem, für ein Filterelement eine verbesserte oder zumindest alternative Ausführungsform anzugeben, durch die eine Verbesserung der Filtrationsleistung des Filterelements ermöglicht ist.

Dieses Problem wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Fluideinrichtung zum Filtern von Schmieröl, vorzugsweise in einer Windenergieanlage, mit mindestens einem Fluidfilter Filterelement zum Filtern von Schmieröl bereitzustellen. Die Filtereinrichtung weist wenigstens ein im Wesentlichen zylindrisches Filtergehäuse, in dem das jeweilige Filterelement angeordnet ist, auf. Zwischen einer Innenwand des Filtergehäuses und dem Filterelement ist ein sich entlang einer Längsmittelachse des Filtergehäuses erstreckender Ringraum ausgebildet. Vorgesehen ist dabei ein zylindrisch und dreistufig ausgebildetes Filterelement zum Filtern von Schmieröl mit einem zylindrischen Feinfilterkörper, der eine Feinfilterstufe bildet, einem zylindrischen Hauptfilterkörper, der eine Hauptfilterstufe bildet, und einem zylindrischen Schutzfilterkörper, der eine Schutzfilterstufe bildet, und mit einer ersten Endscheibe, an der wenigstens ein Bypassventil zur Umgehung der Feinfilterstufe und der Hauptfilterstufe ausgebildet ist, sowie mit einer Zwischenscheibe, die den Feinfilterkörper axial mit dem Hauptfilterkörper verbindet, wobei der Feinfilterkörper und der Hauptfilterkörper axial aufeinander folgen und einen Hohlraum des Filterelements umschließen, so dass die Feinfilterstufe und die Hauptfilterstufe fluidisch parallel angeordnet sind, und wobei der Schutzfilterkörper in diesem Hohlraum angeordnet ist, so dass die Schutzfilterstufe der Feinfilterstufe und der Hauptfilterstufe fluidisch nachgeordnet ist, bereit zu stellen, bei dem gemäß einer ersten erfindungsgemäßen Lösung an der Zwischenscheibe wenigstens zwei radial abstehende, in Umfangsrichtung voneinander beabstandete, über den Umfang der Zwischenscheibe verteilte Abstandselemente ausgebildet sind, durch die das Filterelement beim Wechsel des Filterelements am Filtergehäuse abgestützt ist. Die Abstandselemente sind aus axial und radial verlaufenden Rippen gebildet, und das jeweilige Filterelement stützt sich über die Abstandselemente radial am Filtergehäuse ab. Dies ist vorteilhaft, da dadurch ein Wechsel des Filterelements erleichtert ist. Durch die Abstandselemente ist das Filterelement mittig im Filtergehäuse zentriert. Dies ist vorteilhaft, da dadurch eine gleichmäßige Filtration des Fluidstroms ermöglicht ist. Zweckmäßig sind die Abstandselemente so ausgeführt, dass die Abstandselemente einen möglichst geringen Strömungswiderstand für den das Filterelement durchströmenden Fluidstrom darstellen. Der Fluidstrom wird beim Durchströmen des Filterelements von Verunreinigungen befreit, wobei an dem Hauptfilterkörper und dem Schutzfilterkörper der größere Teil und an dem Feinfilterkörper der kleinere Teil des Fluidstroms gefiltert wird. Dabei durchströmt der Fluidstrom das Filterelement von außen nach innen. Befindet sich Öl in kalten Zustand, z.B. beim Start einer Windenergieanlage, so weist das Öl eine hohe Viskosität auf. Dadurch kann die Hauptfilterstufe und die Feinfilterstufe nur von einem sehr geringen Teil des Fluidstroms durchströmt werden. Dadurch steigt der auf das Bypassventil wirkende Druck an, was zum Öffnen des Bypassventils führt. Der Fluidstrom bzw. das Öl strömt durch das Bypassventil in den Hohlraum und anschließend durch die Schutzfilterstufe. Dadurch ist es ermöglicht, eine Windenergieanlage auch beim Start der Anlage mit gefiltertem Schmieröl zu versorgen. Erwärmt sich das Öl beim Betrieb und zirkuliert anschließend im warmen Zustand in der Windenergieanlage, so ist ein größerer Teil des Fluidstroms in der Lage, die Hauptfilterstufe zu durchströmen. Dies resultiert in einem Druckabfall an dem jeweiligen Bypassventil, was zum Schließen des Bypassventils führt. Der erwärmte Fluidstrom durchströmt im Wesentlichen die Hauptfilterstufe und anschließend die Schutzfilterstufe, wobei geringe Teile des Fluidstroms auch die Feinfilterstufe durchströmen können. Befindet sich das Öl bzw. der Fluidstrom im heißen Zustand, so durchströmt der Fluidstrom die Feinfilterstufe und die Hauptfilterstufe gleichzeitig und anschließend die Schutzfilterstufe, wobei der geforderte Reinheitsgrad des Fluidstroms durch die Hauptfilterstufe und die Feinfilterstufe erreicht wird. An der Schutzfilterstufe findet im Wesentlichen nur dann eine Reinigung des Fluidstroms statt, wenn der Fluidstrom im verunreinigten Zustand durch das Bypassventil und anschließend durch die Schutzfilterstufe strömt. Der Fluidstrom wird durch die Feinfilterstufe besonders gründlich von Verunreinigungen befreit, während durch die Hauptfilterstufe und das Bypassventil ein zu großer Druckabfall des Fluidstroms am Filterelement verhindert wird. Es ist denkbar, dass das wenigstens eine Bypassventil in der Art eines Druckzuschaltventils ausgeführt ist. Ist durch den Fluidstrom ein definierter Druck an dem Bypassventil aufgebaut, so öffnet sich das Bypassventil. Wird der definierte Druck am Bypassventil unterschritten, so schließt sich das Bypassventil. Es ist denkbar, dass der Feinfilterkörper und der Hauptfilterkörper ein Filtermaterial aufweisen, das Glasfasern aufweist und dass der Schutzfilterkörper ein Drahtgewebe aufweist. Es ist ferner möglich, dass an der ersten Endscheibe Fixierlaschen angeordnet sind. Das Filtergehäuse kann einen Deckel zum Schließen des Filtergehäuses aufweisen. Der Deckel kann komplementär zu den Fixierlaschen ausgebildete Aufnahmeöffnungen aufweisen, in die die Fixierlaschen eingreifen, wobei das Filterelement durch die Fixierlaschen mittig im Filtergehäuse zentriert ist, wenn der Deckel auf dem Filtergehäuse angeordnet ist bzw. wenn sich das Filtergehäuse im geschlossenen Zustand befindet. Die Fixierlaschen stehen axial von der ersten Endscheibe ab, wobei es denkbar ist, dass die Fixierlaschen und/oder die erste Endscheibe mittels Spritzguss hergestellt sind.

Das hier vorgestellte Filterelement lässt sich als austauschbare Einheit in ein Filtergehäuse einer Filtereinrichtung, die zum Filtern des Fluidstroms dient, austauschbar einsetzen.

Bevorzugt ist eine Ausführungsform, bei welcher zumindest einer der Filterkörper, also der Feinfilterkörper und/oder der Hauptfilterkörper und/oder der Schutzfilterkörper als Ringfilterkörper ausgestaltet ist, der im Betrieb einer mit dem Filterelement ausgestatteten Filtereinrichtung von dem zu filternden Fluidstrom radial durchströmt ist, um die jeweilige Filtrationsaufgabe zu lösen. Derartige radial druchströmbare Ringfilterkörper zeichnen sich durch einen relativ geringen Raumbedarf bei relativ großem durchströmbarem Querschnitt und somit durch einen vergleichsweise geringen Gegendruck aus. Besonders vorteilhaft ist eine Ausführungsform, bei welcher zumindest der Schutzfilterkörper als Ringfilterkörper ausgestaltet ist, wodurch er sich relativ einfach in dem vom Feinfilterkörper und vom Hauptfilterkörper umschlossenen Innenraum oder Hohlraum des Filterelements unterbringen lässt. Optimal ist eine Variante, bei welcher alle drei Filterkörper jeweils als Ringfilterkörper ausgestaltet sind.

Zur Erziehlung einer besonders großen Filtrationsfläche wird für den jeweiligen Filterkörper vorzugsweise ein gefaltetes Filtermaterial verwendet. Bei einer Ausgestaltung als Ringfilter ist das Fitlermaterial dann sternförmig gefaltet. Dies gilt für den Feinfilterkörper und/oder den Hauptfilterkörper und/oder den Schutzfilterkörper, bevorzugt zumindest für den Feinfilterkörper und/oder den Hauptfilterkörper.

Gemäß einer zweiten erfindungsgemäßen Lösung ist vorgesehen, dass zumindest der Feinfilterkörper zum Absorbieren von Wasser und/oder zum Adsorbieren von Ölalterungsprodukten aus dem Fluidstrom ausgebildet ist. Zusätzlich zum Feinfilterkörper kann auch der Hauptfilterkörper zum Absorbieren von Wasser und/oder zum Adsorbieren von Ölalterungsprodukten aus dem Fluidstrom ausgebildet sein. Es ist sinnvoll, den Gehalt an Wasser im Öl auf ein Minimum zu reduzieren. Befindet sich Wasser im Öl, so können während eines Druckabfalls Wasserdampfblasen entstehen, die bei einem Druckanstieg implodieren. Ferner wirkt Wasser als eine Art Katalysator und beschleunigt die Neigung des Öls zu oxidieren. Dadurch entstehen langkettige, unlösliche und sich ablagernde Ölalterungsprodukte wie z.B. Harze, Schlamm oder Varnish. Dies resultiert in einem erhöhten Verschleiß und Instandhaltungsaufwand z.B. einer Windenergieanlage in welcher das Öl zirkuliert. Durch die Entstehung von Ölalterungsprodukten wird die Fähigkeit des Öls als Kühlmittel zu dienen reduziert. Dementsprechend ist es besonders vorteilhaft, wenn der Feinfilterkörper und gegebenefalls der Hauptfilterkörper sowohl zum Absorbieren von Wasser als auch zum Adsorbieren von Ölalterungsprodukten ausgebildet ist. Die beiden hier vorgestellten erfindungsgemäßen Lösungen lassen sich sowohl separat, also unabhängig voneinander als auch gemeinsam, also kumulativ realisieren.

Gemäß einer vorteilhaften Ausführungsform kann vorgesehen sein, dass der Feinfilterkörper und/oder der Hauptfilterkörper zum Absorbieren von Wasser einen Superabsorber enthält. Ein Superabsorber ist ein Kunststoff, in der Regel ein Polymer, der in der Lage ist, ein Vielfaches seines Eigengewichts an einer polaren Flüssigkeit, also insbesondere von Wasser, aufzunehmen. Durch die Absorption der Flüssigkeit bzw. des Wassers quillt der Superabsorber auf und bildet ein Hydrogel. Mit anderen Worten, der Feinfilterkörper bzw. der Hauptfilterköper kann ein superabsorbierendes, also wasserabsorbierendes Polymer enthalten, das durch die Absorption von Wasser ein Hydrogel bildet.

Bevorzugt kann der Feinfilterkörper bzw. der Hauptfilterkörper zumindest eine Wasser absorbierende Schicht aufweisen, die den Superabsorber bzw. das wasserabsorbierende Polymer enthält, insbesondere als Pulver oder als Granulat oder als Fasern. Die Wasser absorbierende Schicht erstreckt sich insbesondere ringförmig und koaxial zum übrigen Feinfilterkörper bzw. Hauptfilterkörper.

Vorteilhaft kann vorgesehen sein, dass die Wasser absorbierende Schicht ein Polyestervlies aufweist, das zwei Vlieslagen aufweist, zwischen denen der Superabsorber bzw. das wasserabsorbierende Polymer angeordnet ist. Das Polyestervlies kann laminiert sein, um die beiden Lagen aneinander zu fixieren und so den Superabsorber bzw. das wasserabsorbierende Polymer zwischen den Lagen, also in dem Polyestervlies festzulegen.

Gemäß einer anderen vorteilhaften Ausführungsform kann vorgesehen sein, dass der Feinfilterkörper und/oder der Hauptfilterkörper eine Filterschichtanordnung zum Adsorbieren von Ölalterungsprodukten aufweist, die mehrere Filterschichten aufweist, die verschiedene Filterfeinheiten besitzen und die im Feinfilterkörper bzw. im Hauptfilterkörper so angeordnet sind, dass die Filterfeinheit in der Durchströmungsrichtung des Filterkörpers zunimmt. Hierdurch nimmt die Filtrationswirkung in der Durchströmungsrichtung von Filterschicht zu Filterschicht zu, was die dauerhafte Einlagerung bzw. Adsorption von relativ langkettigen Ölalterungsprodukten begünstigt, ohne dass damit ein allzu großer Druckverlust einhergeht. Die Filterfeinheit korreliert mit der Filtrationswirkung, die mit der Maschenweite oder Porengröße korreliert, die ihrerseits mit der Durchlässigkeit für herauszufilternde Festkörper korreliert. Je kleiner die Maschenweite oder Porengröße, desto feiner ist das Filtermaterial und desto kleinere Festkörper lassen sich zurückhalten. Die Filterschichtanordnung bzw. deren Filterschichten erstrecken sich insbesondere ringförmig und koaxial zum übrigen Feinfilterkörper.

Zweckmäßig kann die Filterschichtanordnung zumindest zwei Filterschichten aufweisen, nämlich eine grobe Filterschicht und eine feine Filterschicht, die in der Durchströmungsrichtung des Feinfilterkörpers so angeordnet sind, dass zuerst die grobe Filterschicht und dann die feine Filterschicht durchströmt werden. Vorteilhaft kann die Filterschichtanordnung zumindest drei Filterschichten aufweisen, nämlich eine grobe Filterschicht, eine mittlere Filterschicht und eine feine Filterschicht, die in der Durchströmungsrichtung des Feinfilterkörpers so angeordnet sind, dass zuerst die grobe Filterschicht, dann die mittlere Filterschicht und zuletzt die feine Filterschicht durchströmt werden.

Vorteilhaft kann die jeweilige Filterschicht der Filterschichtanordnung durch ein Glasfasergewebe gebildet sein. Die in den verschiedenen Filterschichten zur Anwendung kommenden Glasfasergewebe unterscheiden sich durch unterschiedliche Maschenweiten bzw. Durchlässigkeiten voneinander.

Besonders vorteilhaft ist eine Ausführungsform, bei der zumindest eine Filterschicht der Filterschichtanordnung den Superabsorber enthält oder durch eine den Superabsorber enthaltende Wasser absorbierende Schicht gebildet ist. Hierdurch erhält die Filterschichtanordnung eine Zusatzfunktion, nämlich als Wasserabsorber. Alternativ kann die Wasser absorbierende Schicht zusätzlich zu der Filterschichtanordnung vorgesehen sein, stromab oder bevorzugt stromauf davon.

Der Feinfilterkörper bzw. der Hauptfilterkörper weist ein Filtermaterial auf, das mehrschichtig aufgebaut sein kann, so dass es die vorstehend genannte Wasser absorbierende Schicht und/oder die vorstehend genannte Filterschichtanordnung aufweisen kann. Außerdem können weitere Schichten vorgesehen sein, wie z.B. eine oder mehrere Drahtschichten zur Stabilisierung des Filtermaterials und/oder eine oder mehrere Kunststoffschichten zum Schutz von Glasfaserschichten. Das Filtermaterial kann sternförmig gefaltet sein, um den ringförmigen Filterkörper zu bilden.

Zweckmäßigerweise kann auch der Hauptfilterkörper eine Filterschichtanordnung zum Adsorbieren von Ölalterungsprodukten aufweisen, die quasi wie die vorstehend beschriebene Filterschichtanordnung des Feinfilterkörpers ausgestaltet sein kann, wobei jedoch die Filtrationswirkung beim Feinfilterkörper kleiner bzw. feiner ausgelegt ist. Zusätzlich oder alternativ kann der Hauptfilterkörper ebenfalls eine solche Wasser absorbierende Schicht aufweisen, die vorstehend für den Feinfilterkörper vorgesehen sein kann. Im Hauptfilterkörper steht letztlich mehr Volumen für mehr Superabsorber zur Verfügung, so dass insgesamt mehr Wasser absorbiert werden kann.

Es ist selbstverständlich denkbar, dass an der Zwischenscheibe wenigstens zwei radial abstehende, in Umfangsrichtung voneinander beabstandete, über den Umfang der Zwischenscheibe verteilte Abstandselemente ausgebildet sind, durch die das Filterelement beim Wechsel des Filterelements am Filtergehäuse abgestützt ist und dass zugleich der Feinfilterkörper zum Absorbieren von Wasser und Ölalterungsprodukten aus dem Fluidstrom ausgebildet ist.

Eine mögliche Ausführungsform schlägt vor, dass der Feinfilterkörper eine Filterfeinheit von 3µm +/- 1µm, der Hauptfilterkörper eine Filterfeinheit von 10µm +/-3µm und der Schutzfilterkörper eine Filterfeinheit von 50µm +/-10µm aufweist. Die Filterfeinheit wird im vorliegenden Zusammenhang so definiert, dass Partikel mit einer Partikelgröße der jeweiligen Feinheit zu 99,5% aus dem Fluidstrom herausgefiltert werden. Das bedeutet beispielsweise, dass ein Filterelement, dessen Filterfeinheit 10µm beträgt, 99,5% von Partikeln mit einer Partikelgröße von mindestens 10µm aus dem Fluidstrom herausfiltern kann.

Erfindungsgemäß ist vorgesehen, dass die Abstandselemente aus axial und radial verlaufenden Rippen gebildet sind. Dies ist vorteilhaft, da eine Zwischenscheibe mit axial und radial verlaufenden Rippen relativ kostengünstig hergestellt werden kann und da es die axial und radial verlaufenden Rippen ermöglichen, dass der Fluidstrom zwischen den Rippen hindurchströmen kann. Die Rippen stellen für den Fluidstrom nur einen geringen Strömungswiderstand dar, wodurch ein unerwünschter Druckabfall an den Rippen weitgehend vermieden wird.

In weiterer Ausgestaltung der Erfindung kann vorgesehen sein, dass das Filterelement eine zweite Endscheibe aufweist, die eine zentrale Auslassöffnung aufweist. Der Schutzfilterkörper ist dabei so im Bereich der zweiten Endscheibe angeordnet, dass der Fluidstrom aus dem Hohlraum nur durch den Schutzfilterkörper hindurch zur Auslassöffnung strömen kann. Dadurch wird im Wesentlichen verhindert, dass der Fluidstrom von dem Hohlraum aus dem Filterelement strömen kann, ohne vorher den Schutzfilterkörper zumindest teilweise zu durchströmen. Dies ist vorteilhaft, da dadurch die Filtrationsleistung des Filterelements verbessert wird. Der durch das wenigstens eine Bypassventil geströmte, verunreinigte Fluidstrom durchströmt den Schutzfilterkörper und verlässt das Filterelement im gefilterten Zustand durch die Auslassöffnung der zweiten Endscheibe.

Bei einer anderen Ausführungsform kann vorgesehen sein, dass der Schutzfilterkörper eine offene Endscheibe und eine geschlossene Endscheibe aufweist, wobei der Schutzfilterkörper über seine offene Endscheibe im Bereich der zweiten Endscheibe am Feinfilterkörper oder am Hauptfilterkörper radial und dicht abgestützt ist. Dadurch wird weitgehend verhindert, dass der Fluidstrom zwischen dem Feinfilterkörper bzw. dem Hauptfilterkörper und dem Schutzfilterkörper an der offenen Endscheibe vorbei strömt. Der Fluidstrom wird im Bereich der zweiten Endscheibe durch die offene Endscheibe so umgelenkt, dass der Fluidstrom den Schutzfilterkörper durchströmt und dabei zumindest von den gröbsten Verunreinigungen befreit wird. Selbstverständlich ist es möglich, dass Teile des Fluidstroms bereits vorher den Schutzfilterkörper durchströmen. Der Fluidstrom durchströmt die offene Endscheibe des Schutzfilterkörpers und verlässt anschließend das Filterelement durch die zentrale Auslassöffnung der zweiten Endscheibe.

Gemäß einer weiteren vorteilhaften Ausführungsform kann vorgesehen sein, dass der Schutzfilterkörper an seiner geschlossenen Endscheibe radial abstehende und in der Umfangsrichtung verteilt sowie voneinander beabstandet angeordnete Stützelemente aufweist. Dabei ist der Schutzfilterkörper über die Stützelemente am Feinfilterkörper oder am Hauptfilterkörper oder an der Zwischenscheibe radial abgestützt. Dadurch ist der Schutzfilterkörper im Hohlraum mittig zentriert. Dies ist vorteilhaft, da dadurch eine gleichmäßige Durchströmung des Schutzfilterkörpers ermöglicht ist. Der Fluidstrom kann zwischen zwei benachbarten Stützelementen an der geschlossenen Endscheibe vorbeiströmen. Dabei ist es zweckmäßig, dass die Stützelemente so ausgeführt sind, dass der Strömungswiderstand, den die Stützelemente dem Fluidstrom entgegensetzten, so gering wie möglich ist.

Ein Filterelement der vorstehend beschriebenen Art kann in einem im Wesentlichen zylindrischen Filtergehäuse angeordnet sein, wobei zwischen einer Innenwand des Filtergehäuses und dem Filterelement ein sich entlang einer Längsmittelachse des Filtergehäuses erstreckender Ringraum ausgebildet ist. Das Filterelement ist über die Abstandselemente radial am Filtergehäuse abgestützt. Das Filterelement ist ferner durch die Abstandselemente mittig im Filtergehäuse zentriert, derart, dass die Längsmittelachse des Filterelements im Wesentlichen parallel zu der Innenwand des Filtergehäuses bzw. parallel zu der Längsmittelachse des Filtergehäuses verläuft, wodurch der Ringraum stets den gleichen Durchmesser aufweist. Dies ist vorteilhaft, da dadurch eine gleichmäßige Filtration des Fluidstroms ermöglicht ist.

Eine Filtereinrichtung mit mindestens einem Filterelement der vorstehend beschriebenen Art, welches in einem im Wesentlichen zylindrischen Filtergehäuse angeordnet ist, kommt vorzugsweise in einer Windenergieanlage zum Filtern von Schmieröl zum Einsatz.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine isometrische Ansicht eines erfindungsgemäßen Filterelements,
- Fig. 2: eine Draufsicht auf das erfindungsgemäße Filterelement,
- Fig. 3: eine teilweise geschnittene Seitenansicht des erfindungsgemäßen Filterelements,
- Fig. 4: eine stark vereinfachte Schnittansicht eines Filtermaterials,
- Fig. 5: eine Schnittansicht wie in Fig. 4, jedoch bei einer anderen Ausführungsform des Filtermaterials.

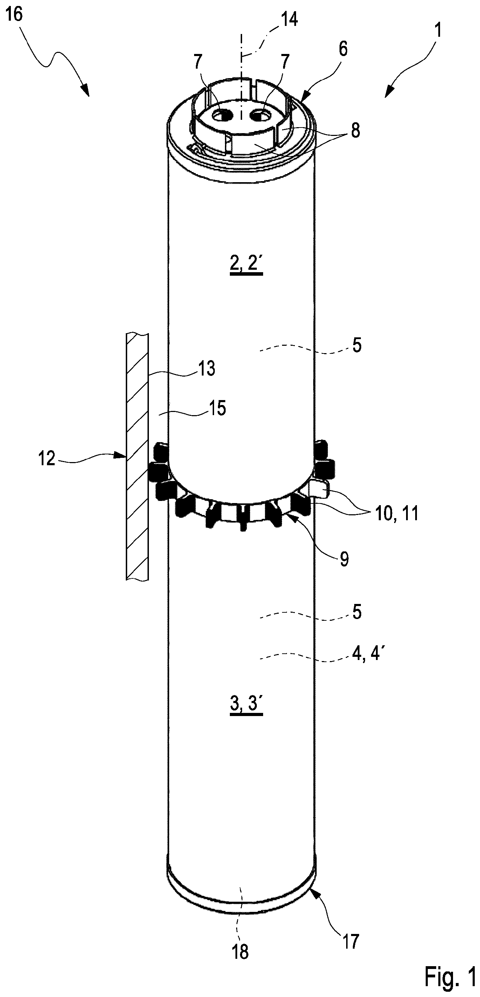

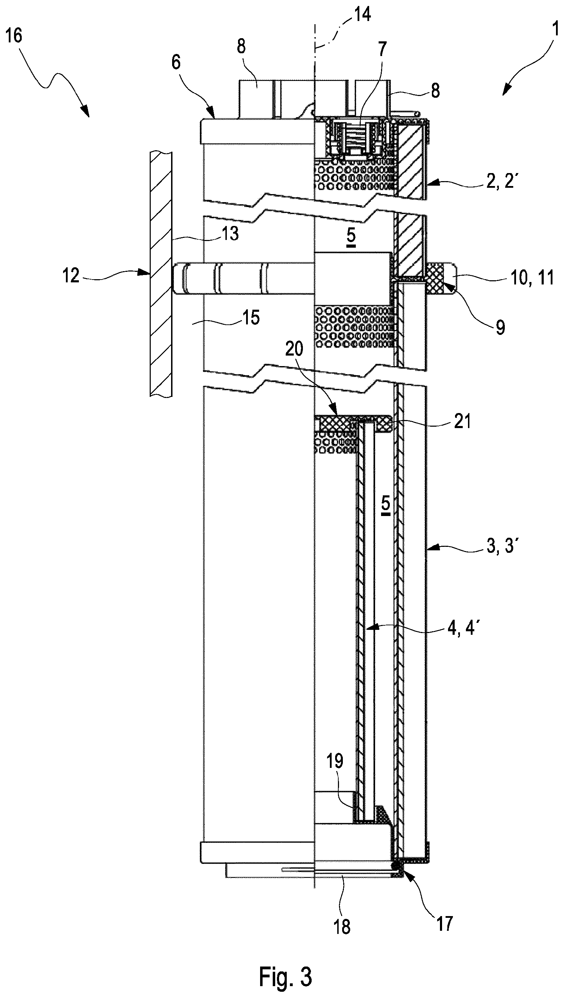

Wie in Fig. 1 illustriert, weist ein zylindrisch und dreistufig ausgebildetes Filterelement 1 zum Filtern eines Fluidstroms, insbesondere zum Filtern von Schmieröl, einen zylindrischen Feinfilterkörper 2, der eine Feinfilterstufe 2' bildet, einen zylindrischen Hauptfilterkörper 3, der eine Hauptfilterstufe 3' bildet, und einen zylindrischen Schutzfilterkörper 4 auf, der eine Schutzfilterstufe 4' bildet. Dabei folgen der Feinfilterkörper 2 und der Hauptfilterkörper 3 axial aufeinander und umschließen einen nur in Fig. 3 gezeigten Hohlraum 5, so dass die Feinfilterstufe 2' und die Hauptfilterstufe 3' fluidisch parallel angeordnet sind. Der ebenso nur in Fig. 3 gezeigte Schutzfilterkörper 4, ist in diesem Hohlraum 5 angeordnet, so dass die Schutzfilterstufe 4' der Feinfilterstufe 2' und der Hauptfilterstufe 3' fluidisch nachgeordnet ist. Der Schutzfilterkörper 4 ist dabei in Fig. 1 und 3 im Bereich des Hauptfilterkörpers 3 angeordnet. Es ist ebenso denkbar, dass der Schutzfilterkörper 4 im Bereich des Feinfilterkörpers 2 angeordnet ist.

Bei der hier gezeigten, bevorzugten Ausführungsform sind alle drei Filterkörper, also der Feinfilterkörper 2, der Hauptfilterkörper 3 und der Schutzfilterkörper 4 jeweils als Ringfilterkörper ausgestaltet, so dass der jeweilige ringförmige Filterkörper 2, 3, 4 im Betrieb einer mit dem Filterelement 1 ausgestatteten Filtereinrichtung von dem zu filternden Fluidstrom radial durchströmt ist, um die jeweilige Filtrationsaufgabe zu lösen. Derartige radial druchströmbare Ringfilterkörper zeichnen sich durch einen relativ geringen Raumbedarf bei relativ großem durchströmbarem Querschnitt und somit durch einen vergleichsweise geringen Gegendruck aus.

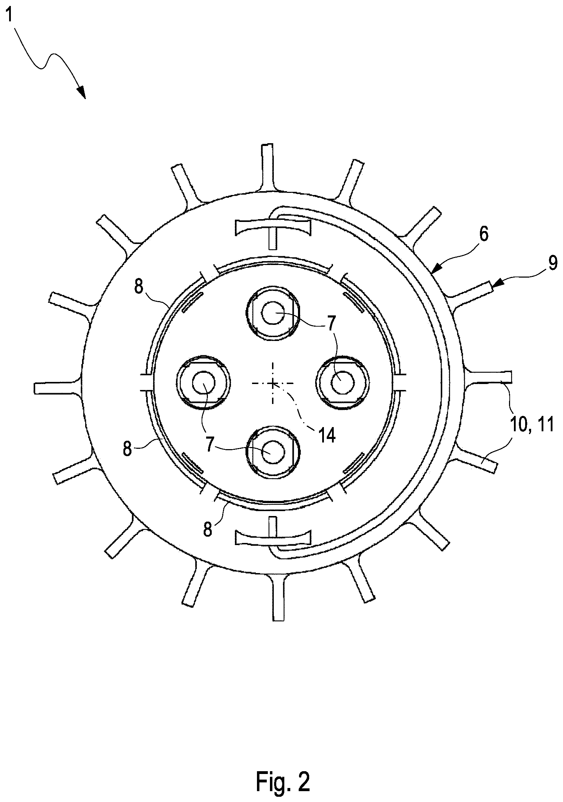

Das Filterelement 1 weist ferner eine erste Endscheibe 6 auf, an der wenigstens ein Bypassventil 7 zur Umgehung der Feinfilterstufe 2' und der Hauptfilterstufe 3' ausgebildet ist. Die in den Fig. 1 bis 3 gezeigte Anzahl der Bypassventile ist dabei lediglich beispielhaft zu verstehen. Es ist denkbar, dass an der ersten Endscheibe 6 Fixierlaschen 8 ausgebildet sind.

Wie in den Fig. 1 und 3 illustriert, weist das Filterelement 1 eine Zwischenscheibe 9 auf, durch die der Feinfilterkörper 2 axial mit dem Hauptfilterkörper 3 verbunden ist. An der Zwischenscheibe 9 sind radial abstehende, in Umfangsrichtung voneinander beabstandete, über den Umfang der Zwischenscheibe 9 verteilte Abstandselemente 10 ausgebildet. Die Anzahl der in den Fig. 1 bis 3 gezeigten Abstandselemente 10 ist dabei lediglich beispielhaft zu verstehen. Es ist denkbar, dass die Abstandselemente 10 aus axial und radial verlaufenden Rippen 11 gebildet sind. Es verlässt den Rahmen der vorliegenden Erfindung nicht, wenn die Abstandselemente 10 eine andere geometrische Formgebung aufweisen.

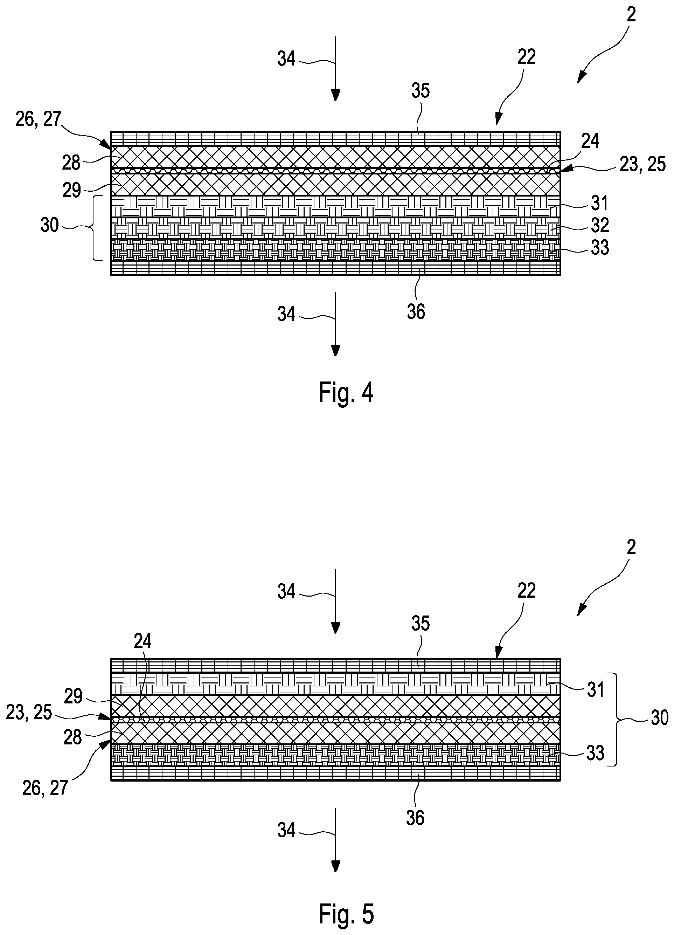

Der Feinfilterkörper 2 kann eine Filterfeinheit von 3µm +/- 1µm, der Hauptfilterkörper 3 kann eine Filterfeinheit von 10µm +/-3µm und der Schutzfilterkörper 4 kann eine Filterfeinheit von 50µm +/-10µm aufweisen. Der Feinfilterkörper 2 kann ferner zum Absorbieren von Wasser und/oder Ölalterungsprodukten aus dem Fluidstrom ausgebildet sein. Dies wird weiter unten noch in Verbindung mit den Fig. 4 und 5 näher erläutert.

Das Filterelement 1 ist derart in einem im Wesentlichen zylindrischen Filtergehäuse 12 angeordnet, dass zwischen einer Innenwand 13 des Filtergehäuses 12 und dem Filterelement 1 ein sich entlang einer Längsmittelachse 14 des Filtergehäuses 12 erstreckender Ringraum 15 ausgebildet ist. Dabei ist das Filterelement 1 über die an der Zwischenscheibe 9 ausgebildeten Abstandselemente 10 radial am Filtergehäuse 12 abstützt. Das Filtergehäuse 12, die Innenwand 13 und der Ringraum 15 sind nur in den Fig. 1 und 3 schematisch illustriert.

Entsprechend der Fig. 1 und 3 weist das Filterelement 1 eine zweite Endscheibe 17 auf, in der eine zentrale Auslassöffnung 18 ausgebildet ist. Der Schutzfilterkörper 4 ist so im Bereich der zweiten Endscheibe 17 angeordnet, dass der Fluidstrom aus dem Hohlraum 5 nur durch den Schutzfilterkörper 4 hindurch zur Auslassöffnung 18 strömen kann.

Wie in Fig. 3 illustriert, weist der Schutzfilterkörper 4 eine offene Endscheibe 19 und eine geschlossene Endscheibe 20 auf. Dabei ist der Schutzfilterkörper 4 über seine offene Endscheibe 19 im Bereich der zweiten Endscheibe 17 am Feinfilterkörper 2 oder am Hauptfilterkörper 3 radial und dicht abgestützt. Es ist ferner denkbar, dass der Schutzfilterkörper 4 an seiner geschlossenen Endscheibe 20 radial abstehende und in der Umfangsrichtung verteilt sowie voneinander beabstandet angeordnete Stützelemente 21 aufweist. Dabei ist der Schutzfilterkörper 4 über die Stützelemente 21 am Feinfilterkörper 2 oder am Hauptfilterkörper 3 oder an der Zwischenscheibe 9 radial abgestützt.

Eine Filtereinrichtung 16 mit dem Filtergehäuse 12 und mit mindestens einem Filterelement 1 der vorstehend beschriebenen Art kommt vorzugsweise in einer Windenergieanlage zum Filtern von Schmieröl zum Einsatz.

Gemäß den Fig. 4 und 5 kann der Feinfilterkörper 2 ein Filtermaterial 22 aufweisen, von dem in den Fig. 4 und 5 jeweils nur ein kleiner Teil als Schnittansicht dargestellt ist. Bei einem ringförmigen Feinfilterkörper 2 kann sich das Filtermaterial 22 ebenfalls ringförmig erstrecken. Bevorzugt ist das Filtermaterial 22 außerdem gefaltet, so dass es sich im ringförmigen Feinfilterkörper 2 sternförmig erstreckt.

Gemäß einer vorteilhaften Ausführungsform kann nun vorgesehen sein, dass der Feinfilterkörper 22 zum Absorbieren von Wasser einen Superabsorber 23 enthält. Ein solcher Superabsorber 23 ist ein Kunststoff, in der Regel ein Polymer 24, der in der Lage ist, ein Vielfaches seines Eigengewichts an einer polaren Flüssigkeit, also insbesondere von Wasser, aufzunehmen. Durch die Absorption der Flüssigkeit bzw. des Wassers quillt der Superabsorber 23 auf und bildet ein Hydrogel 25. Mit anderen Worten, der Feinfilterkörper 2 kann ein superabsorbierendes, also wasserabsorbierendes Polymer 24 enthalten, das durch die Absorption von Wasser ein Hydrogel 25 bildet.

Bevorzugt kann der Feinfilterkörper 2 hierzu im Filtermaterial 22 zumindest eine Wasser absorbierende Schicht 26 aufweisen, die den Superabsorber 23 bzw. das wasserabsorbierende Polymer 24 enthält. Die Wasser absorbierende Schicht 26 erstreckt sich insbesondere ringförmig und koaxial zum übrigen Feinfilterkörper 2. Vorteilhaft kann nun vorgesehen sein, dass die Wasser absorbierende Schicht 26 ein Polyestervlies 27 aufweist bzw. dadurch gebildet ist, das zwei Vlieslagen 28, 29 aufweist, zwischen denen der Superabsorber 23 bzw. das wasserabsorbierende Polymer 24 angeordnet ist. Das Polyestervlies 27 kann laminiert sein, um die beiden Lagen 28, 29 aneinander zu fixieren und so den Superabsorber 23 bzw. das wasserabsorbierende Polymer 24 zwischen den Lagen 28, 29, also in dem Polyestervlies 27 festzulegen.

Zusätzlich oder alternativ kann nun vorgesehen sein, dass der Feinfilterkörper 2 im Filtermaterial 22 eine Filterschichtanordnung 30 zum Adsorbieren von Ölalterungsprodukten aufweist, die mehrere Filterschichten 31, 32, 33 aufweist, die verschiedene Filterfeinheiten besitzen und die im Feinfilterkörper 2 so angeordnet sind, dass die Filterfeinheit in der durch Pfeile angedeuteten Durchströmungsrichtung 34 des Feinfilterkörpers 2 zunimmt. Hierdurch nimmt die Filtrationswirkung in der Durchströmungsrichtung 34 von Filterschicht 31, 32, 33 zu Filterschicht 31, 32, 33 zu. Die Filterschichten 31, 32, 33 und somit die Filterschichtanordnung 30 erstrecken sich insbesondere ringförmig und koaxial zum übrigen Feinfilterkörper 2.

Zweckmäßig kann die Filterschichtanordnung 30 zumindest zwei, drei oder mehr Filterschichten 31, 32, 33 aufweisen. Im Beispiel der Fig. 4 sind genau drei Filterschichten in der Filterschichtanordnung 30 vorgesehen, nämlich eine grobe Filterschicht 31, eine mittlere Filterschicht 32 und eine feine Filterschicht 33, die in der Durchströmungsrichtung 34 des Feinfilterkörpers 2 so angeordnet sind, dass zuerst die grobe Filterschicht 31, dann die mittlere Filterschicht 32 und zuletzt die feine Filterschicht 33 durchströmt werden. Bei der in Fig. 5 gezeigten Ausführungsform sind in der Filterschichtanordnung 30 dagegen genau zwei Filterschichten angeordnet, nämlich eine grobe Filterschicht 31 und eine feine Filterschicht 33, die in der Durchströmungsrichtung 34 des Feinfilterkörpers 2 so angeordnet sind, dass zuerst die grobe Filterschicht 31 und danach die feine Filterschicht 33 durchströmt werden. Wie weiter oben erwähnt kann der Feilfilterkörper 2 eine Filterfeinheit von 3µm +/- 1µm besitzen. Bei der hier vorgestellten progressiven Filtrationswirkung wird diese Filterfeinheit des mehrschichtigen Feinfilterkörpers 2 letztlich durch die Schicht mit der geringsten Filterfeinheit definiert. Das bedeutet in diesem Beispiel, dass die feine Filterschicht 33 eine Filterfeinheit von 3µm +/- 1µm besitzt, während die mittlere Filterschicht 32 und die grobe Filterschicht 31 gröber sind. Beispielsweise kann die mittlere Filterschicht 32 eine Filterfeinheit von 6µm +/- 2µm oder mehr aufweisen und die grobe Filterschicht 31 kann eine Filterfeinheit von 9µm +/- 3µm oder mehr aufweisen. Vorteilhaft kann die jeweilige Filterschicht 31, 32, 33 der Filterschichtanordnung 30 durch ein Glasfasergewebe oder Glasfaservlies gebildet sein. Die in den verschiedenen Filterschichten 31, 32, 33 zur Anwendung kommenden Glasfasergewebe oder Glasfaservliese unterscheiden sich durch unterschiedliche Maschenweiten bzw. Durchlässigkeiten bzw. Porengrößen voneinander. Auch sind verschiedene Faserlängen und/oder Faserdicken denkbar.

Im Beispiel der Fig. 4 ist die Wasser absorbierende Schicht 26 zusätzlich zu der Filterschichtanordnung 30 vorgesehen. In Fig. 4 ist die Wasser absorbierende Schicht 26 bezüglich der Durchströmungsrichtung 34 stromauf von der Filterschichtanordnung 30 angeordnet. Hierdurch werden der Superabsorber 23 und im Betrieb das Hydrogel 25 besser im Filtermaterial 22 gehalten.

Bei der in Fig. 5 gezeigten Ausführungsform ist der Superabsorber 23 in die Filterschichtanordnung 30 integriert. Hierzu ist die Wasser absorbierende Schicht 26 zwischen zwei der Filterschichten 31, 32, 33 der Filterschichtanordnung 30 angeordnet. Im Beispiel der Fig. 5 bildet die Wasser absorbierende Schicht 26 die mittlere Schicht zwischen der groben Filterschicht 31 und der feinen Filterschicht 33. Hierdurch erhält die Filterschichtanordnung 30 eine Zusatzfunktion, nämlich als Wasserabsorber.

Der Feinfilterkörper 2 weist somit ein Filtermaterial 22 auf, das mehrschichtig aufgebaut ist, so dass es die vorstehend genannte Wasser absorbierende Schicht 26 und/oder die vorstehend genannte Filterschichtanordnung 30 aufweisen kann. Außerdem können weitere Schichten vorgesehen sein, wie z.B. eine oder mehrere Drahtschichten zur Stabilisierung des Filtermaterials 22. Im Beispiel der Fig. 4 und 5 ist das Filtermaterial 22 durch eine anströmseitige Drahtgitterschicht 35 und durch eine abströmseitige Drahtgitterschicht 36 stabilisiert und geschützt. Wenigstens eine weitere, nicht gezeigte Kunststoffvliesschicht kann z.B. zum Schutz der Glasfaserschichten vorgesehen sein.

## Patentansprüche

1. Filtereinrichtung (16) zum Filtern von Schmieröl, vorzugsweise in einer Windenergieanlage, mit mindestens einem Filterelement (1) zum Filtern von Schmieröl,
- wobei die Filtereinrichtung (16) wenigstens ein im Wesentlichen zylindrisches Filtergehäuse (12), in dem das jeweilige Filterelement (1) angeordnet ist, aufweist,
- wobei zwischen einer Innenwand (13) des Filtergehäuses (12) und dem Filterelement (1) ein sich entlang einer Längsmittelachse (14) des Filtergehäuses (12) erstreckender Ringraum (15) ausgebildet ist,
- wobei das Filterelement (1) zylindrisch und dreistufig ausgebildet ist,
- wobei das Filterelement (1) einen zylindrischen Feinfilterkörper (2), der eine Feinfilterstufe (2') bildet, einen zylindrischen Hauptfilterkörper (3), der eine Hauptfilterstufe (3') bildet, und einen zylindrischen Schutzfilterkörper (4), der eine Schutzfilterstufe (4') bildet, aufweist,
- wobei der Feinfilterkörper (2) und der Hauptfilterkörper (3) axial aufeinander folgen und einen Hohlraum (5) des Filterelements (1) umschließen, so dass die Feinfilterstufe (2') und die Hauptfilterstufe (3') fluidisch parallel angeordnet sind,
- wobei der Schutzfilterkörper (4) in diesem Hohlraum (5) angeordnet ist, so dass die Schutzfilterstufe (4') der Feinfilterstufe (2') und der Hauptfilterstufe (3') fluidisch nachgeordnet ist,
- wobei das Filterelement (1) eine erste Endscheibe (6), an der wenigstens ein Bypassventil (7) zur Umgehung der Feinfilterstufe (2') und der Hauptfilterstufe (3') ausgebildet ist, aufweist,
- wobei das Filterelement (1) eine Zwischenscheibe (9), die den Feinfilterkörper (2) axial mit dem Hauptfilterkörper (3) verbindet, aufweist,
**dadurch gekennzeichnet,**
- **dass** an der Zwischenscheibe (9) wenigstens zwei radial abstehende, in Umfangsrichtung voneinander beabstandete, über den Umfang der Zwischenscheibe (9) verteilte Abstandselemente (10) ausgebildet sind,
- **dass** die Abstandselemente (10) aus axial und radial verlaufenden Rippen (11) gebildet sind, und
- **dass** sich das jeweilige Filterelement (1) über die Abstandselemente (10) radial am Filtergehäuse (12) abstützt.

2. Filtereinrichtung (16) nach Anspruch 1,
**dadurch gekennzeichnet,**
- **dass** der Feinfilterkörper (2) als Ringfilterkörper ausgestaltet ist, der vom Fluidstrom radial durchströmbar ist, und/oder
- **dass** der Hauptfilterkörper (3) als Ringfilterkörper ausgestaltet ist, der vom Fluidstrom radial durchströmbar ist, und/oder
- **dass** der Schutzfilterkörper (4) als Ringfilterkörper ausgestaltet ist, der vom Fluidstrom radial durchströmbar ist.

3. Filtereinrichtung (16) nach einem der vorhergehenden Ansprüche,
**dadurch gekennzeichnet,**
- **dass** der Feinfilterkörper (2) zum Absorbieren von Wasser und/oder zum Adsorbieren von Ölalterungsprodukten aus dem Fluidstrom ausgebildet ist,
- wobei der Feinfilterkörper (2) vorzugsweise einen Superabsorber (23) zum Absorbieren von Wasser enthält, und
- wobei der Feinfilterkörper (2) vorzugsweise zumindest eine Wasser absorbierende Schicht (26) aufweist, die den Superabsorber (23) enthält, und
- wobei die Wasser absorbierende Schicht (26) vorzugsweise ein Polyestervlies (27) aufweist, das zwei Vlieslagen (28, 29) aufweist, zwischen denen der Superabsorber (23) angeordnet ist.

4. Filtereinrichtung (16) nach Anspruch 3,
**dadurch gekennzeichnet,**
**dass** der Feinfilterkörper (2) zum Adsorbieren von Ölalterungsprodukten eine Filterschichtanordnung (30) aufweist, die mehrere Filterschichten (31, 32, 33) aufweist, die verschiedene Filterfeinheiten besitzen und die im Feinfilterkörper (2) so angeordnet sind, dass die Filterfeinheit in der Durchströmungsrichtung (34) des Feinfilterkörpers (2) zunimmt.

5. Filtereinrichtung (16) nach Anspruch 4,
**dadurch gekennzeichnet,**
- **dass** die Filterschichtanordnung (30) zumindest zwei Filterschichten aufweist, nämlich eine grobe Filterschicht (31) und eine feine Filterschicht (33), die in der Durchströmungsrichtung (34) des Feinfilterkörpers (2) so angeordnet sind, dass zuerst die grobe Filterschicht (31) und dann die feine Filterschicht (33) durchströmt werden, oder
- **dass** die Filterschichtanordnung (30) zumindest drei Filterschichten aufweist, nämlich eine grobe Filterschicht (31), eine mittlere Filterschicht (32) und eine feine Filterschicht (33), die in der Durchströmungsrichtung (34) des Feinfilterkörpers (2) so angeordnet sind, dass zuerst die grobe Filterschicht (31), dann die mittlere Filterschicht (32) und zuletzt die feine Filterschicht (33) durchströmt werden.

6. Filtereinrichtung (16) nach Anspruch 4 oder 5,
**dadurch gekennzeichnet,**
**dass** zumindest eine Filterschicht (31, 32, 33) der Filterschichtanordnung (30) durch ein Glasfasergewebe gebildet ist.

7. Filtereinrichtung (16) nach Anspruch 3sowie nach einem der Ansprüche 4 bis 6,
**dadurch gekennzeichnet,**
**dass** zumindest eine Filterschicht (31, 32, 33) der Filterschichtanordnung (30) den Superabsorber (23) enthält oder durch eine den Superabsorber (23) enthaltende Wasser absorbierende Schicht (26) gebildet ist.

8. Filtereinrichtung (16) zum Filtern von Schmieröl, vorzugsweise in einer Windenergieanlage, mit mindestens einem Filterelement zum Filtern von Schmieröl,
- wobei die Filtereinrichtung (16) wenigstens ein im Wesentlichen zylindrisches Filtergehäuse (12), in dem das jeweilige Filterelement (1) angeordnet ist, aufweist,
- wobei zwischen einer Innenwand (13) des Filtergehäuses (12) und dem Filterelement (1) ein sich entlang einer Längsmittelachse (14) des Filtergehäuses (12) erstreckender Ringraum (15) ausgebildet ist,
- wobei das Filterelement (1) zylindrisch und dreistufig ausgebildet ist,
- wobei das Filterelement (1) einen zylindrischen Feinfilterkörper (2), der eine Feinfilterstufe (2') bildet, einen zylindrischen Hauptfilterkörper (3), der eine Hauptfilterstufe (3') bildet, und einen zylindrischen Schutzfilterkörper (4), der eine Schutzfilterstufe (4') bildet, aufweist,
- wobei der Feinfilterkörper (2) und der Hauptfilterkörper (3) axial aufeinander folgen und einen Hohlraum (5) des Filterelements (1) umschließen, so dass die Feinfilterstufe (2') und die Hauptfilterstufe (3') fluidisch parallel angeordnet sind,
- wobei der Schutzfilterkörper (4) in diesem Hohlraum (5) angeordnet ist, so dass die Schutzfilterstufe (4') der Feinfilterstufe (2') und der Hauptfilterstufe (3') fluidisch nachgeordnet ist,
- wobei das Filterelement (1) eine erste Endscheibe (6), an der wenigstens ein Bypassventil (7) zur Umgehung der Feinfilterstufe (2') und der Hauptfilterstufe (3') ausgebildet ist, aufweist,
- wobei das Filterelement (1) eine Zwischenscheibe (9), die den Feinfilterkörper (2) axial mit dem Hauptfilterkörper (3) verbindet, aufweist,
**dadurch gekennzeichnet,**
- **dass** an der Zwischenscheibe (9) wenigstens zwei radial abstehende, in Umfangsrichtung voneinander beabstandete, über den Umfang der Zwischenscheibe (9) verteilte Abstandselemente (10) ausgebildet sind,
- **dass** die Abstandselemente (10) aus axial und radial verlaufenden Rippen (11) gebildet sind,
- **dass** sich das jeweilige Filterelement (1) über die Abstandselemente (10) radial am Filtergehäuse (12) abstützt, und
- **dass** der Feinfilterkörper (2) zum Absorbieren von Wasser und/oder Ölalterungsprodukten aus dem Schmieröl ausgebildet ist.

9. Filtereinrichtung (16) nach einem der vorhergehenden Ansprüche,
**dadurch gekennzeichnet,**
- **dass** der Feinfilterkörper (2) eine Filterfeinheit von 3µm +/- 1µm aufweist,
- **dass** der Hauptfilterkörper (3) eine Filterfeinheit von 10µm +/- 3µm aufweist,
- **dass** der Schutzfilterkörper (4) eine Filterfeinheit von 50µm +/- 10µm aufweist.

10. Filtereinrichtung (16) nach Anspruch 8 oder 9,
**dadurch gekennzeichnet,**
- **dass** das Filterelement (1) eine zweite Endscheibe (17) aufweist, die eine zentrale Auslassöffnung (18) aufweist,
- **dass** der Schutzfilterkörper (4) so im Bereich der zweiten Endscheibe (17) angeordnet ist, dass der Fluidstrom aus dem Hohlraum (5) nur durch den Schutzfilterkörper (4) hindurch zur Auslassöffnung (18) strömen kann.

11. Filtereinrichtung (16) nach Anspruch 10,
**dadurch gekennzeichnet,**
- **dass** der Schutzfilterkörper (4) eine offene Endscheibe (19) und eine geschlossene Endscheibe (20) aufweist,
- **dass** der Schutzfilterkörper (4) über seine offene Endscheibe (19) im Bereich der zweiten Endscheibe (17) am Feinfilterkörper (2) oder am Hauptfilterkörper (3) radial und dicht abgestützt ist.

12. Filtereinrichtung (16) nach Anspruch 11,
**dadurch gekennzeichnet,**
**dass** der Schutzfilterkörper (4) an seiner geschlossenen Endscheibe (20) radial abstehende und in der Umfangsrichtung verteilt sowie voneinander beabstandet angeordnete Stützelemente (21) aufweist, über die der Schutzfilterkörper (4) am Feinfilterkörper (2) oder am Hauptfilterkörper (3) oder an der Zwischenscheibe (9) radial abgestützt ist.

## Claims

1. Filter apparatus (16) for filtering lubricating oil, preferably in a wind turbine, with at least one filter element (1) for filtering lubricating oil,
- wherein the filter apparatus (16) has at least one essentially cylindrical filter housing (12) in which the respective filter element (1) is arranged,
- wherein an annular space (15) extending along a longitudinal central axis (14) of the filter housing (12) is formed between an inner wall (13) of the filter housing (12) and the filter element (1),
- wherein the filter element (1) is formed cylindrical and in three stages,
- wherein the filter element (1) has a cylindrical fine filter body (2) forming a fine filter stage (2'), a cylindrical main filter body (3) forming a main filter stage (3'), and a cylindrical protective filter body (4) forming a protective filter stage (4'),
- wherein the fine filter body (2) and the main filter body (3) follow one another axially and enclose a cavity (5) of the filter element (1), such that the fine filter stage (2') and the main filter stage (3') are arranged fluidically parallel,
- wherein the protective filter body (4) is arranged in this cavity (5), such that the protective filter stage (4') is fluidically arranged downstream of the fine filter stage (2') and the main filter stage (3'),
- wherein the filter element (1) has a first end plate (6) on which at least one bypass valve (7) is formed for bypassing the fine filter stage (2') and the main filter stage (3'),
- wherein the filter element (1) has an intermediate disc (9) which axially connects the fine filter body (2) to the main filter body (3),
**characterized in**
- **that** at least two radially projecting spacer elements (10) are formed on the intermediate disc (9), spaced apart from one another in the circumferential direction and distributed over the circumference of the intermediate disc (9),
- **that** the spacer elements (10) are formed from axially and radially extending ribs (11), and
- **that** the respective filter element (1) is supported radially on the filter housing (12) via the spacer elements (10).

2. Filter apparatus (16) according to claim 1,
**characterized in**
- **that** the fine filter body (2) is configured as an annular filter body, through which the fluid flow can flow radially, and/or
- **that** the main filter body (3) is configured as an annular filter body, through which the fluid flow can flow radially, and/or
- **that** the protective filter body (4) is configured as an annular filter body, through which the fluid flow can flow radially.

3. Filter apparatus (16) according to any one of the preceding claims,
**characterized in**
- **that** the fine filter body (2) is configured to absorb water and/or adsorb oil ageing products from the fluid flow,
- wherein the fine filter body (2) preferably contains a superabsorbent (23) for absorbing water, and
- wherein the fine filter body (2) preferably has at least one water-absorbing layer (26) containing the superabsorbent (23), and
- wherein the water-absorbing layer (26) preferably comprises a polyester nonwoven fabric (27) having two nonwoven layers (28, 29) between which the superabsorbent (23) is arranged.

4. Filter apparatus (16) according to claim 3,
**characterized in**
**that** the fine filter body (2) for adsorbing oil ageing products has a filter layer arrangement (30) which has multiple filter layers (31, 32, 33) which have different filter finenesses and which are arranged in the fine filter body (2) such that the filter fineness increases in the flow direction (34) of the fine filter body (2).

5. Filter apparatus (16) according to claim 4,
**characterized in**
- **that** the filter layer arrangement (30) has at least two filter layers, namely a coarse filter layer (31) and a fine filter layer (33), which are arranged in the flow direction (34) of the fine filter body (2) such that the flow first passes through the coarse filter layer (31) and then the fine filter layer (33), or
- **that** the filter layer arrangement (30) has at least three filter layers, namely a coarse filter layer (31), a middle filter layer (32) and a fine filter layer (33), which are arranged in the flow direction (34) of the fine filter body (2) such that the flow first passes through the coarse filter layer (31), then the middle filter layer (32) and finally the fine filter layer (33).

6. Filter apparatus (16) according to claim 4 or 5,
**characterized in**
**that** at least one filter layer (31, 32, 33) of the filter layer arrangement (30) is formed by a glass fiber fabric.

7. The filter apparatus (16) according to claim 3 and according to any one of claims 4 to
6,
**characterized in**
**that** at least one filter layer (31, 32, 33) of the filter layer arrangement (30) contains the superabsorbent (23) or is formed by a water-absorbing layer (26) containing the superabsorbent (23).

8. Filter apparatus (16) for filtering lubricating oil, preferably in a wind turbine, with at least one filter element for filtering lubricating oil,
- wherein the filter apparatus (16) has at least one essentially cylindrical filter housing (12) in which the respective filter element (1) is arranged,
- wherein an annular space (15) extending along a longitudinal central axis (14) of the filter housing (12) is formed between an inner wall (13) of the filter housing (12) and the filter element (1),
- wherein the filter element (1) is formed cylindrical and in three stages,
- wherein the filter element (1) has a cylindrical fine filter body (2) forming a fine filter stage (2'), a cylindrical main filter body (3) forming a main filter stage (3'), and a cylindrical protective filter body (4) forming a protective filter stage (4'),
- wherein the fine filter body (2) and the main filter body (3) follow one another axially and enclose a cavity (5) of the filter element (1), such that the fine filter stage (2') and the main filter stage (3') are arranged fluidically parallel,
- wherein the protective filter body (4) is arranged in this cavity (5), such that the protective filter stage (4') is fluidically arranged downstream of the fine filter stage (2') and the main filter stage (3'),
- wherein the filter element (1) has a first end plate (6) on which at least one bypass valve (7) is formed for bypassing the fine filter stage (2') and the main filter stage (3'),
- wherein the filter element (1) has an intermediate disc (9) which axially connects the fine filter body (2) to the main filter body (3),
**characterized in**
- **that** at least two radially projecting spacer elements (10) are formed on the intermediate disc (9), spaced apart from one another in the circumferential direction and distributed over the circumference of the intermediate disc (9),
- **that** the spacer elements (10) are formed from axially and radially extending ribs (11),
- **that** the respective filter element (1) is supported radially on the filter housing (12) via the spacer elements (10), and
- **that** the fine filter body (2) is configured to absorb water and/or oil ageing products from the lubricating oil.

9. Filter apparatus (16) according to any one of the preceding claims,
**characterized in**
- **that** the fine filter body (2) has a filter fineness of 3 µm +/-1 µm,
- **that** the main filter body (3) has a filter fineness of 10 µm +/- 3 µm,
- **that** the protective filter body (4) has a filter fineness of 50 µm +/- 10 µm.

10. Filter apparatus (16) according to claim 8 or 9,
**characterized in**
- **that** the filter element (1) has a second end plate (17) which has a central outlet opening (18),
- **that** the protective filter body (4) is arranged in the area of the second end plate (17)
such that the fluid flow from the cavity (5) can only flow through the protective filter body (4) to the outlet opening (18).

11. Filter apparatus (16) according to claim 10,
**characterized in**
- **that** the protective filter body (4) has an open end plate (19) and a closed end plate (20),
- **that** the protective filter body (4) is radially and tightly supported on the fine filter body (2) or on the main filter body (3) via its open end plate (19) in the area of the second end plate (17).

12. Filter apparatus (16) according to claim 11,
**characterized in**
**that** the protective filter body (4) has, on its closed end plate (20), radially projecting support elements (21) which are distributed in the circumferential direction and arranged at a distance from one another, by means of which the protective filter body (4) is radially supported on the fine filter body (2) or on the main filter body (3) or on the intermediate plate (9).

## Revendications

1. Appareil de filtration (16) pour la filtration d'huile lubrifiante, de préférence dans une éolienne, avec au moins un élément filtrant (1) pour la filtration d'huile lubrifiante,
- dans lequel l'appareil de filtration (16) présente au moins un boîtier de filtre (12) sensiblement cylindrique dans lequel l'élément filtrant (1) respectif est disposé,
- dans lequel un espace annulaire (15) s'étendant le long d'un axe central longitudinal (14) du boîtier de filtre (12) est conçu entre une paroi intérieure (13) du boîtier de filtre (12) et l'élément filtrant (1),
- dans lequel l'élément filtrant (1) est conçu de manière cylindrique et à trois niveaux,
- dans lequel l'élément filtrant (1) présente un corps de filtre fin (2) cylindrique qui forme un niveau de filtre fin (2'), un corps de filtre principal (3) cylindrique qui forme un niveau de filtre principal (3') et un corps de filtre de protection (4) cylindrique qui forme un niveau de filtre de protection (4'),
- dans lequel le corps de filtre fin (2) et le corps de filtre principal (3) se suivent l'un l'autre axialement et entourent un espace creux (5) de l'élément filtrant (1) de sorte que le niveau de filtre fin (2') et le niveau de filtre principal (3') soient disposés fluidiquement de manière parallèle.
- dans lequel le corps de filtre de protection (4) est disposé dans cet espace creux (5) de sorte que le niveau de filtre de protection (4') soit disposé fluidiquement en aval du niveau de filtre fin (2') et du niveau de filtre principal (3'),
- dans lequel l'élément filtrant (1) présente un premier disque d'extrémité (6) au niveau duquel au moins une soupape de dérivation (7) est conçue pour contourner le niveau de filtre fin (2') et le niveau de filtre principal (3'),
- dans lequel l'élément filtrant (1) présente un disque intermédiaire (9) qui relie axialement le corps de filtre fin (2) au corps de filtre principal (3),
**caractérisé en ce que**
- au moins deux éléments d'écartement (10) faisant saillie radialement, espacés l'un de l'autre dans le sens périphérique, répartis sur la périphérie du disque intermédiaire (9) sont conçus au niveau du disque intermédiaire (9),
- les éléments d'écartement (10) sont conçus à partir de nervures (11) s'étendant axialement et radialement, et
- l'élément filtrant (1) respectif s'appuie radialement contre le boîtier de filtre (12) par le biais des éléments d'écartement (10).

2. Appareil de filtration (16) selon la revendication 1,
**caractérisé en ce que**
- le corps de filtre fin (2) est configuré comme corps de filtre annulaire qui peut être traversé radialement par un flux de fluide, et/ou
- le corps de filtre principal (3) est configuré comme corps de filtre annulaire qui peut être traversé radialement par un flux de fluide, et/ou
- le corps de filtre de protection (4) est configuré comme corps de filtre annulaire qui peut être traversé radialement par un flux de fluide.

3. Appareil de filtration (16) selon l'une quelconque des revendications précédentes,
**caractérisé en ce que**
- le corps de filtre fin (2) est conçu pour l'absorption d'eau et/ou l'adsorption de produits de vieillissement d'huile provenant du flux de fluide,
- dans lequel le corps de filtre fin (2) contient de préférence un superabsorbeur (23) pour l'absorption d'eau, et
- dans lequel le corps de filtre fin (2) présente de préférence au moins une couche (26) absorbant de l'eau qui contient le superabsorbeur (23), et
- dans lequel la couche (26) absorbant de l'eau présente de préférence un non-tissé en polyester (27) qui présente deux couches de non-tissé (28, 29) entre lesquelles le superabsorbeur (23) est disposé.

4. Appareil de filtration (16) selon la revendication 3,
**caractérisé en ce que**
le corps de filtre fin (2) présente pour l'adsorption de produits de vieillissement d'huile un agencement de couches de filtre (30) qui présente plusieurs couches de filtre (31, 32, 33) qui possèdent différentes finesses de filtre et qui sont disposées dans le corps de filtre fin (2) de sorte que la finesse de filtre augmente dans le sens d'écoulement (34) du corps de filtre fin (2).

5. Appareil de filtration (16) selon la revendication 4,
**caractérisé en ce que**
- l'agencement de couches de filtre (30) présente au moins deux couches de filtre, à savoir une couche de filtre (31) grossière et une couche de filtre (33) fine qui sont disposées dans le sens d'écoulement (34) du corps de filtre fin (2) de sorte que tout d'abord la couche de filtre (31) grossière et ensuite la couche de filtre (33) fine soient traversées ou
- l'agencement de couches de filtre (30) présente au moins trois couches de filtre, à savoir une couche de filtre (31) grossière, une couche de filtre (32) moyenne et une couche de filtre (33) fine qui sont disposées dans le sens d'écoulement (34) du corps de filtre fin (2) de sorte que tout d'abord la couche de filtre (31) grossière, ensuite la couche de filtre (32) moyenne et enfin la couche de filtre (33) fine soient traversées.

6. Appareil de filtration (16) selon la revendication 4 ou 5,
**caractérisé en ce que**
au moins une couche de filtre (31, 32, 33) de l'agencement de couches de filtre (30) est formée par un tissu de fibres de verre.

7. Appareil de filtration (16) selon la revendication 3 ainsi que selon l'une quelconque des revendications 4 à 6,
**caractérisé en ce que**
au moins une couche de filtre (31, 32, 33) de l'agencement de couches de filtre (30) contient le superabsorbeur (23) ou est formée par une couche (26) absorbant l'eau contenant le superabsorbeur (23).

8. Appareil de filtration (16) pour la filtration d'huile lubrifiante, de préférence dans une éolienne, avec au moins un élément filtrant pour la filtration d'huile lubrifiante,
- dans lequel l'appareil de filtration (16) présente au moins un boîtier de filtre (12) sensiblement cylindrique dans lequel l'élément filtrant (1) respectif est disposé,
- dans lequel un espace annulaire (15) s'étendant le long d'un axe central longitudinal (14) du boîtier de filtre (12) est conçu entre une paroi intérieure (13) du boîtier de filtre (12) et l'élément filtrant (1),
- dans lequel l'élément filtrant (1) est conçu de manière cylindrique et à trois niveaux,
- dans lequel l'élément filtrant (1) présente un corps de filtre fin (2) cylindrique qui forme un niveau de filtre fin (2'), un corps de filtre principal (3) cylindrique qui forme un niveau de filtre principal (3') et un corps de filtre de protection (4) cylindrique qui forme un niveau de filtre de protection (4'),
- dans lequel le corps de filtre fin (2) et le corps de filtre principal (3) se suivent l'un l'autre axialement et entourent un espace creux (5) de l'élément filtrant (1) de sorte que le niveau de filtre fin (2') et le niveau de filtre principal (3') soient disposés fluidiquement de manière parallèle.
- dans lequel le corps de filtre de protection (4) est disposé dans cet espace creux (5) de sorte que le niveau de filtre de protection (4') soit disposé fluidiquement en aval du niveau de filtre fin (2') et du niveau de filtre principal (3'),
- dans lequel l'élément filtrant (1) présente un premier disque d'extrémité (6) au niveau duquel au moins une soupape de dérivation (7) est conçue pour contourner le niveau de filtre fin (2') et le niveau de filtre principal (3'),
- dans lequel l'élément filtrant (1) présente un disque intermédiaire (9) qui relie axialement le corps de filtre fin (2) au corps de filtre principal (3),
**caractérisé en ce que**
- au moins deux éléments d'écartement (10) faisant saillie radialement, espacés l'un de l'autre dans le sens périphérique, répartis sur la périphérie du disque intermédiaire (9) sont conçus au niveau du disque intermédiaire (9),
- les éléments d'écartement (10) sont conçus à partir de nervures (11) s'étendant axialement et radialement,
- l'élément filtrant (1) respectif s'appuie radialement contre le boîtier de filtre (12) par le biais des éléments d'écartement (10), et
- le corps de filtre fin (2) est conçu pour l'absorption d'eau et/ou l'adsorption de produits de vieillissement d'huile provenant du flux de fluide.

9. Appareil de filtration (16) selon l'une quelconque des revendications précédentes,
**caractérisé en ce que**
- le corps de filtre fin (2) présente une finesse de filtre de 3 µm +/-1 µm,
- le corps de filtre principal (3) présente une finesse de filtre de 10 µm +1-3 µm,
- le corps de filtre de protection (4) présente une finesse de filtre de 50 µm +/-10 µm.

10. Appareil de filtration (16) selon la revendication 8 ou 9,
**caractérisé en ce que**
- l'élément filtrant (1) présente un second disque d'extrémité (17) qui présente une ouverture de sortie (18) centrale,
- le corps de filtre de protection (4) est disposé dans la zone du second disque d'extrémité (17) de sorte que
le flux de fluide puisse s'écouler de l'espace creux (5) uniquement à travers le corps de filtre de protection (4) vers l'ouverture de sortie (18).

11. Appareil de filtration (16) selon la revendication 10,
**caractérisé en ce que**
- le corps de filtre de protection (4) présente un disque d'extrémité (19) ouvert et un disque d'extrémité (20) fermé,
- le corps de filtre de protection (4) est en appui contre le corps de filtre fin (2) ou contre le corps de filtre principal (3) radialement et de manière étanche par le biais de son disque d'extrémité (19) ouvert dans la zone du second disque d'extrémité (17).

12. Appareil de filtration (16) selon la revendication 11,
**caractérisé en ce que**
le corps de filtre de protection (4) présente des éléments d'appui (21) faisant saillie radialement et disposés répartis dans le sens périphérique ainsi qu'espacés l'un de l'autre au niveau de son disque d'extrémité (20) fermé, par le biais desquels le corps de filtre de protection (4) est en appui radialement contre le corps de filtre fin (2) ou contre le corps de filtre principal (3) ou contre le disque intermédiaire (9).
